# EUROPEAN PATENT APPLICATION

(11) **EP 1 350 857 A1**
(43) Date of publication of application: **08.10.2003**
(21) Application number: 03251599.1
(22) Date of filing: 15.03.2003
(51) Int. Cl.: C22C 1/10, C22C 47/00, C22C 49/00, B22D 19/00, B22D 19/14

(54) **Preform structure and method of manufacturing a preform formed into metal matrix composite**

(30) Priority: 18.03.2002 JP 2002074216
(71) Applicant: FUJI JUKOGYO KABUSHIKI KAISHA, Tokyo (JP)
(72) Inventor: Oda, Teruyuki, c/o Fuji Jukogyo Kabushiki Kaisha, Tokyo (JP)
(74) Representative: W.P. Thompson & Co.

(57) **Abstract**

When a cylinder block is cast, a bearing housing is constituted by a preform integrally cast with the cylinder block. In order to raise the strength of the bearing housing, a metal matrix composite is formed around the preform. The preform is constituted by a high volume factor member having a relatively high volume factor and two low volume factor members having a relatively low volume factor connected with top and under surfaces of the high volume factor member respectively. The high volume factor member is made of solid metal and the low volume factor member is made of sintered metal filaments. Base material of the cylinder block infiltrates into the low volume factor member to form a metal matrix composite in the preform.

## Description

### BACKGROUND OF THE INVENTION

### 1. Field of the invention

The present invention relates to a method of manufacturing a preform used for forming Metal Matrix Composite (MMC) and a bearing housing structure having the preform for a cylinder block of an internal combustion engine.

### 2. Discussion of related arts

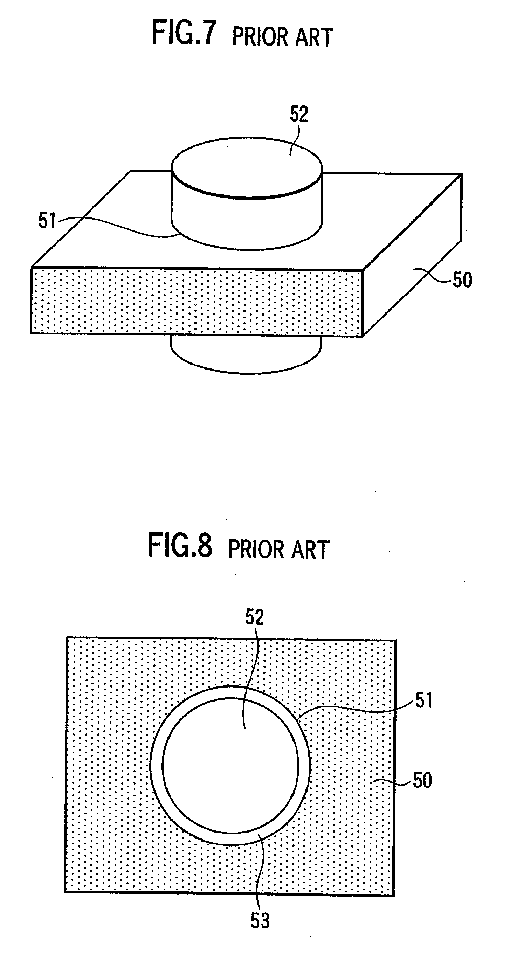

Generally, cylinder blocks made of cast aluminum alloy are widely used for automobile engines. As shown schematically in Fig. 7 and Fig. 8, a crank journal 52 is supported by a bearing housing 51 of a cylinder block 50. The crank journal 52 is made of forged steel, for example S48C (symbol of grade according to Japanese Industrial Standard Material Specification; hereinafter referred to as JIS) (coefficient of linear expansion: 11.7 x 10⁻⁶/°C) and the bearing housing 51 is made of cast aluminum alloy, ADC12 (coefficient of linear expansion: 21.0 x 10⁻⁶/°C). When the temperature of the bearing housing 51 rises by the combustion of mixture gas in a cylinder, the difference of coefficient of linear expansion between iron base and aluminum base materials increases a clearance 53 between the bearing housing 51 and the crank journal 52, this leading to an increase in noise or vibration of an engine.

There is a prior art in which MMC is formed in the bearing housing 51 using a preform for the purpose of controlling the clearance, that is, the coefficient of linear expansion, without changing aluminum alloy of base material.

However, if a part of or the whole of cast aluminum alloy is formed into MMC, in order to secure the interfacial strength between MMC and base material, the High Pressure Die Casting (HPDC) Method is generally used. In this case, an adequate and stable infiltration of aluminum alloy must be accomplished by preheating the preform.

For example, when sintered metal powder including 85%Fe-14%Cr-1%Si (weight %) is used for preform material, if the volume factor (hereinafter abbreviated as Vf) of the preform is high (70 to 90 %) or the thickness of the preform is large (10 to 30 millimeters), aluminum alloy has an exacerbated infiltration. To solve this, the preform is required to be preheated up to approximately 600 to 650 degrees centigrade.

However, when the preform is preheated, since the condition of infiltration and composition of aluminum alloy is largely dependent upon the preheating temperature, the defect rate becomes high due to the dispersion of conditions of the control. In addition to this, depending upon the preheat time or preheat conditions, the preform is subjected to oxidization and as a result the strength decreases. Further, if a part of cast aluminum alloy is formed into MMC, sometimes other portions apart from the MMC portion have blow holes and the like because of the imbalance of solidification.That is, the preheating of the preform provides many difficulties in the quality control and quality assurance, this inevitably resulting in a cost increase of products.

Further, as described above, if the preform has a high Vf or has a large thickness, the interfacial strength between aluminum alloy and MMC can not be raised more than a specified value due to the strength of the aluminum alloy of the interface. On the other hand, if the preform is infiltrated well up to the inside thereof, the coefficient of linear expansion can not be reduced less than a specified value.

If the preform has a low volume factor (50 to 70%) or has a small thickness (2 to 10 millimeters), since the strength of the preform is small, even if the aluminum alloy infiltrates at low speeds (for example 0.1 meters/second, 60 Mpa), the preform is easily deformed or destroyed. Further, since the volume factor is unstable, depending on specifications, the manufacturing becomes impossible. Further, it becomes difficult to secure a stable coefficient of linear expansion necessary for MMC. When the aluminum alloy infiltrates into the preform by HPDC to form MMC, generally the preform must have a strength withstanding the speed of molten metal of 50 meters/second and a casting pressure of 100Mpa.

If sintered metal is used, since it is difficult to secure a stable volume factor with a preform having complicated configurations, the range of freedom in designing the preform is restricted. Further, it is difficult to judge the state of infiltration and composition of aluminum alloy in a central part of the preform.

If metal filaments containing 75%Fe-20%Cr-15%Si (weight %) are used, there are many advantages such as being able to obtain stable strength and volume factors and the like, compared to the preformusing sintered metal. However, the preform using metal filaments costs more than three times as much as a preform using sintered metal.

Further, for a preform having a high volume factor (for example, 70 to 90%) or for a preform having a large thickness (for example, 10 to 30 millimeters), there are problems similar to the case of using sintered metal. Further, for a preform having a low volume factor (for example, 10 to 60%) or for a preform having a small thickness (for example, 2 to 6 millimeters), a stable coefficient of linear expansion necessary for MMC can not be secured similarly to the case of sintered metal. Further, similarly to the preform using sintered metal, it is difficult to judge the state of infiltration and composition of aluminum alloy in a central part of the preform.

The coefficient of linear expansion and strength of the preform can be raised by adjusting contents of the preform such as increasing the content of chromium (Cr). However the increase of chromium results in a bearing housing containing the preform with exacerbated machinability.

Further, it is possible to infiltrate aluminum into the preform by using the laminar flow charge casting such as the low pressure die casting method (LPDC) under a special condition. However the laminar flow charge casting provides many restrictions in designing and manufacturing and an increased manufacturing cost.

Further, for forming a part of cast aluminum alloy into MMC by HPDC, there is a method of infiltrating aluminum alloy into a composite piece of the preform. However, this method also provides many restrictions in designing and manufacturing.

### SUMMARY OF THE INVENTION

It is an object of the present invention to provide a preform for forming a metal matrix composite capable of easily infiltrating base material by the casting method such as HPDC, LPDC and the like without preheating the preform and capable of obtaining a desired coefficient of linear expansion and strength, while securing an adequate interfacial strength. It is another object of the present invention to provide a method of manufacturing the preform having the capabilities described above. It is further object of the present invention to propose a bearing housing structure having an excellent fatigue strength of a cylinder block by integrally casting the bearing housing with the preform and forming a metal matrix composite in the bearing housing.

In order to attain these objects, the preform comprises a high volume factor member having a relatively high volume factor and a low volume factor member having a relatively low volume factor connected with the high volume member. In the preform, the high volume factor member is made of solid metal and the low volume factor member is made of metal filaments. The high volume factor member is formed into a plate configuration and the high volume factor member is interleaved between the two low volume members.

The method of manufacturing the preform comprises the steps of first weaving metal filaments to make a metal filament web, then punching out the metal filament web into a plurality of small webs, then laminating and pressing the small webs into a laminated web block, then sintering the laminated web block to complete a low volume factor member having a relatively low volume factor, then interleaving a high volume factor member having a relatively high volume factor between the low volume factor members, and finally sintering the high volume factor member and the low volume factor member in an interleaving manner between the low volume factor members.

Thus manufactured preform is incorporated in a bearing housing for supporting a crankshaft of a cylinder block. When the cylinder block is cast, a metal matrix composite (MMC)is formed around the preform set in a scheduled position of the bearing housing.

By way of example only, specific embodiments of the present invention will now be described, with reference to the accompanying drawings, in which:-
Fig. 1 is a perspective view showing a preform according to the present invention;
Figs. 2a to 2h are explanatory views showing sequential steps of manufacturing the preform according to the present invention;
Fig. 3 is a perspective schematic view showing a first embodiment of a bearing housing structure having the preform according to the present invention;
Fig. 4 is a sectional view of Fig. 3;
Fig. 5a is a front view showing a second embodiment of a bearing housing structure having the preform according to the present invention;
Fig. 5b is a sectional view taken along a line I-I of Fig. 5a;
Fig. 6a is a front view showing a third embodiment of a bearing housing structure having the preform according to the present invention;
Fig. 6b is a sectional view taken along a line II-II of Fig. 6a;
Fig . 7 is a schematic perspective view showing a bearing housing structure according to a prior art; and
Fig. 8 is a sectional view of Fig. 7.

### DETAILED DESCRIPTION OF THE PREFERRED EMBODIMENT

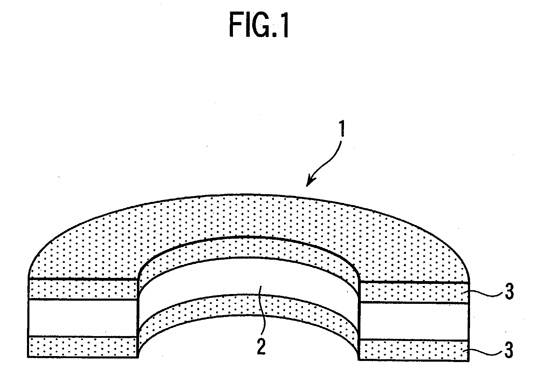

Referring now to Fig. 1, reference numeral 1 denotes a preform constituting a bearing housing of a cylinder block. The preform 1 has a semicircular ring-shaped, laminated structure comprising a high volume factor member (hereinafter referred to as high Vf member) 2 and a low volume factor member (hereinafter referred to as low Vf member) 3 respectively connected with top and under surfaces of the high Vf member 2 by the diffused junction. The preform 1 has a semicircular groove for supporting a crank journal. The high Vf member 2 is formed by solid metal, metal filaments, porous metal and the like and the low Vf member 3 is formed by metal filaments and the like.

Thus, since the low Vf member 3 is provided at the interface of the high Vf member 2 in a condition of diffused junction, aluminum alloy easily infiltrates into the low Vf member 3 of the preform 1 to form MMC therearound. Further, the existence of the high Vf member makes the infiltration of aluminum alloy into the preform easy by HPDC and as a result the required interfacial strength between MMC and base material and desirable coefficients of linear expansion can be secured without applying preheats to the preform 1.

If the high Vf member 2 has an ensured high volume factor Vf, the quality of obtainable MMC is stabilized. For example, solid metal into which aluminum alloy does not infiltrate is used for the high Vf member of the preform 1. The stable quality and function can be secured by appropriately establishing material, thickness, volume factor and the like.

Further, if using metal filaments as the low Vf member 3, since even a small amount of metal filaments (Vf: 10 to 20%) can hold the configuration of the low Vf member 3, the manufacturing cost can be reduced and the strength capable of withstanding HPDC can be secured. Further, aluminum alloy can be filtrated into the low Vf member 3 up to a desired level of infiltration (more than 95% of infiltration) without preheating the preform. As a result, a stable MMC can be obtained.

According to the preform 1 of the present invention, since the casting processes, particularly the processes for infiltrating aluminum alloy are simplified, the manufacturing method, processes and conditions suitable for the specification can be selected. Further, the quality control is simplified and as a result the manufacturing cost can be reduced. Further, the range of application of this manufacturing method can be enlarged.

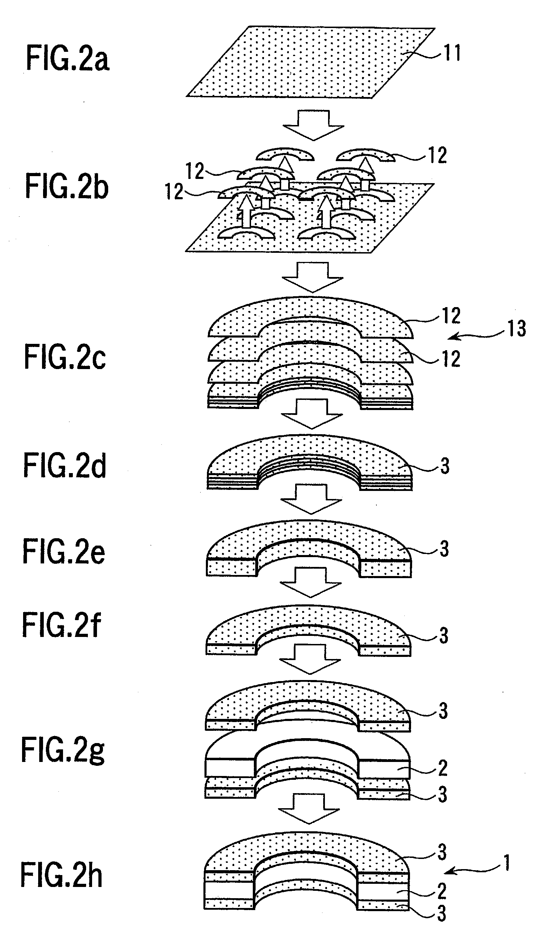

Referring to Fig. 2a, metal filaments are woven into a metal filament web 11 having a thickness of 20 to 100µm by use of a fleece machine. Next, as shown in Fig. 2b, a small web 12 having a specified shape is punched out from the metal filament web 11 by a punching machine.

Next, as shown in Fig. 2c, a plurality of the small webs 12 are piled up to form a laminated web block 13 and then, as shown in Fig. 2d, after the laminated web block 13 is pressed, the laminated web block 13 is formed into a low Vf member 3 by connecting the metal filaments with each other (diffused junction) by means of sintering the laminated web block 13 as shown in Fig. 2e.

Next, as illustrated in Fig. 2f, the low Vf member 3 is pressed again to adjust the thickness thereof and then, as shown in Fig. 2g, the high Vf member 2 is interleaved between two low Vf members 3. After that, the laminated material is formed into the preform 1 by sintering, providing a diffused junction between the high Vf member 2 and the low Vf member 3.

According to a preform 1 manufactured in this way, the volume factor of the low Vf member 3 can be controlled within ± around 2.5 % with respect to the design value.

The manufacturing method of the preform 1 is not limited to the method described above. The method can be changed according to the specification and functions of the preform 1. For example, if the volume factor of the low Vf member 3 can be allowed to have a dispersion up to ± 5%, the processes shown in Fig. 2e and Fig. 2f can be omitted. Further, instead of using the low Vf member 3 formed in the processes shown in Fig. 2a through Fig. 2e, web-like metal filaments or metal filaments themselves are laminated with the high Vf member 2 and pressed directly. This pressed laminated material is sintered to obtain the diffused junction between metal filaments of the low Vf member 3 and after that the preform 1 is completed in the processes shown in Fig. 2f through Fig. 2h. In this case, shortened processes provide reducedcost. Further, if the overall peripheral surface is covered by the low Vf member 2, the diffused junction is applied to the covered surface of the high Vf member in the same manner.

A preform 1 formed in this way is machined as required and then aluminum alloy is infiltrated into the preform 1 held by a casting die to form MMC. In case of machining the sintered preform, the surface condition is changed by the machining and as a result has an effect on the infiltration of aluminum alloy, particularly on the interfacial strength. It is preferable that the specification of the preform is determined taking that effect into consideration. Further, since sometimes the machining by a milling machine clogs most of porous portions and as a result there is a possibility that the interfacial strength can not be secured, the electric discharge machining is preferable because of its relatively small effect on the interfacial strength.

If the preform 1 having the structure illustrated in Fig. 1 is constituted by a high Vf member 2 using a solid material of SUS430 (JIS) stainless steel and two low Vf members 3 using stainless steel filaments of 75%Fe-20%Cr-5%Si (weight %), the wire diameter of stainless filaments, the range of dispersion of the wire diameter and the volume factor of the low Vf member 3 can be selected within the ranges of 20 to 100 µm,0 to 6 µm and 20 to 40%, respectively. Particularly, in the case of infiltrating aluminum alloy by HPDC, 40 µm for the wire diameter and 20% for the volume factor are preferable from the view point of infiltration of aluminum alloy. Further, in this case, the sintering conditions are preferably 1200°C for the sintering temperature, 0.4 kPa for the sintering pressure and 2 to 6 hours for the sintering duration.

In the case of infiltrating aluminum alloy to form MMC, it is preferable to eliminate a stress remaining in aluminum alloy during fast cooling by applying heat treatment such as the T5 process and the like to avoid adverse phenomena such as deformation and degraded strength.

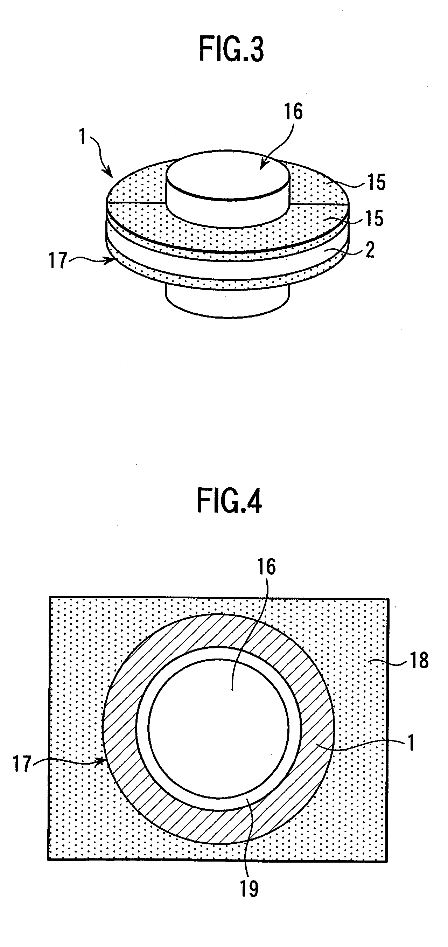

Fig. 3 and Fig. 4 are schematic views of a first embodiment of a bearing housing structure having the preform 1 illustrated in Fig. 1. A bearing housing 17 is constituted by infiltrating aluminum alloy into the preform 1. A shaft 16 is supported by two such aluminum alloy castings 15 formed into MMC.

If the high Vf member 2 of the preform 1 is constituted by a stainless steel solid material SUS430 (JIS) and the low Vf member 3 is constituted by stainless steel filaments whose contents are 75%Fe-20%Cr-5%Si (weight %), the coefficient of linear expansion of the preform formed into MMC by aluminum alloy ADC12 (JIS) is 12.0x10⁻⁶/°C. In this case, an own coefficient of linear expansion of stainless steel filaments is 10.8x10⁻⁶/°C.

Accordingly, if the shaft 16 is made of iron base material S48C (JIS) whose coefficient of linear expansion is 11.7x10⁻⁶/°C, since the difference of coefficients of linear expansion between the shaft 16 and the bearing housing 17 containing the preform 2 can be reduced, so that when the temperature of the bearing housing 17 rises, the clearance 19 can be maintained within the tolerance, whereby vibrations or noises generating during the rotation of the shaft can be prevented.

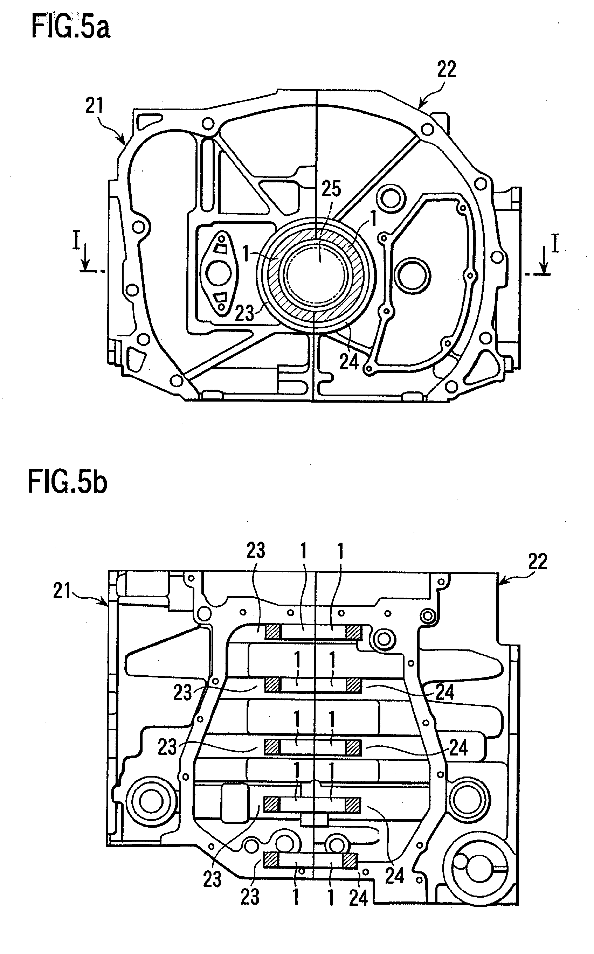

Fig. 5a and Fig. 5b show a second embodiment of a bearing housing structure having the preform according to the present invention. In this example, the bearing housings are incorporated onto a cylinder block of an horizontally opposed four cylinder engine. The cylinder block is made of aluminum alloy (for example ADC12) casting, being divided into a left cylinder block 21 and a right cylinder block 22 which are independently cast, respectively. A plurality of left bearing housings 23 respectively having a semicircular groove are formed in the left cylinder block 21. Similarly, a plurality of right bearing housings 24 having a semicircular groove are formed in the right cylinder block 22.

A crankshaft 25 is held between the left bearing housings 23 and the right bearing housings 24 and is supported by the respective grooves of these bearing housings 23, 24. The crankshaft 25 which is formed from steel (for example S48C) rotates in the grooves while the bearing housings 23, 24 are subjected to large impact loads caused by the combustion in cylinders. Further, the crankshaft 25 has a thermal expansion through the heat transference from the combustion in the cylinders.

In the second embodiment of the bearing housing structure, the preform 1 illustrated in Fig. 1 is incorporated in the respective bearing housings 23, 24. When the respective cylinder blocks 21, 22 are cast, the respective performs 1 are disposed in a scheduled position of each bearing housing and are formed into MMC.

Thus, since the preform 1 is formed into MMC in the respective bearing housings 23, 24, compared to the bearing housings constituted only by aluminum alloy, the bearing housings 23, 24 have an excellent fatigue strength and a reduced coefficient of linear expansion.

For example, if the preform 1 constituted by the high Vf member 2 of solid stainless steel SUS430 (JIS) and the low Vf member of stainless steel filaments containing 75%Fe-20%Cr-5%Si (weight %) are used, the aluminum alloy ADC12 (JIS) as base material infiltrates into the preform 1 by HPDC, the fatigue strength can be improved by 2.5 times, compared to the simple aluminum alloy ADC12 (JIS) and as a result the endurance of the cylinder blocks 21 , 22 can be remarkably enhanced.

Further, as described before, since the coefficient of linear expansion of the preform 1 formed into MMC in ADC12 is 12.0x10⁻⁶/°C, the coefficient of linear expansion can be reduced by as much as 43%, compared to the simple ADC12 whose coefficient of linear expansion is 21.0x10⁻⁶/°C. Accordingly, if the crankshaft 25 is made of steel S48C whose coefficient of linear expansion is 11.7x10⁻⁶/°C, since the difference of coefficient of linear expansion between the crankshaft 25 and the preform 1 formed into MMC is reduced, when the temperature of the bearing housings 23, 24 increases, the clearance between the crankshaft 25 and the bearing housings 23, 24 can be kept within a specified tolerance and as a result noises and vibrations during the operation of the vehicle can be effectively prevented.

The aforesaid fatigue strength is measured under the following conditions: stress applied; 135Mpa, number of repetition; 1x10⁷, test piece; 8mm(diameter) x 90mm(length), rotation speed; 3000rpm. Further, the coefficient of linear expansion is measured under the following conditions: temperature; 0 to 150°C, test piece; 5mm(diameter) x20mm (length).

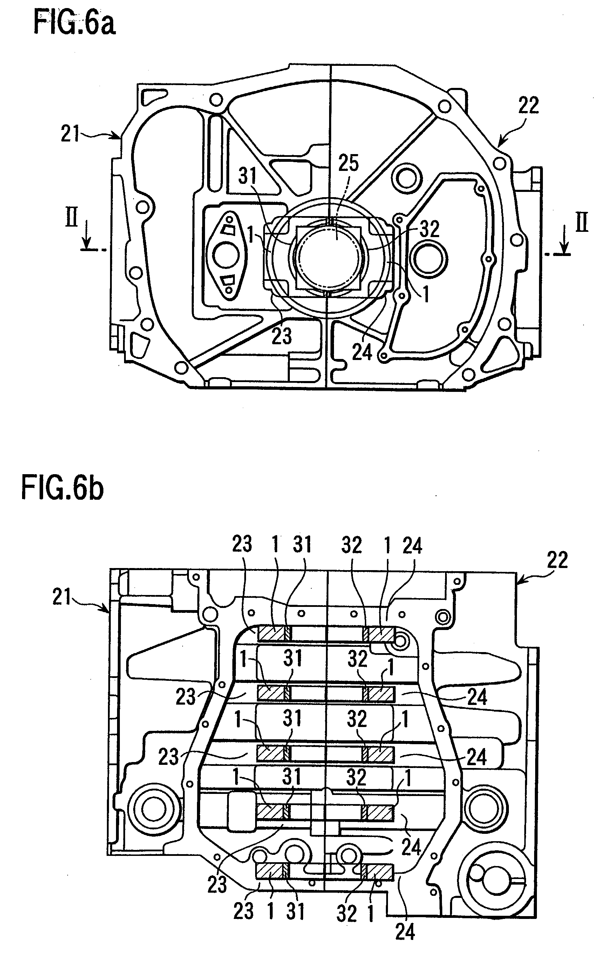

Fig. 6a and Fig. 6b show a third embodiment of a bearing housing structure having the preform according to the present invention. In this example, similarly to the second embodiment shown in Figs. 5a and 5b, the bearing housings are incorporated onto a cylinder block of an horizontally opposed four cylinder engine.

In this embodiment, the preform 1 integrally cast in the left and right bearing housings 23, 24 has a rectangular configuration and has a semicircular groove at one side of the rectangle. Other constructions are identical to those of Fig. 5a. Reference numerals 31, 32 denote a bearing metal accommodated in the left and right bearing housings 23, 24, respectively.

According to the embodiment, since the preform 1 has a rectangular configuration, the preform 1 can have a larger MMC area than the preform 1 of Fig. 5a and as a result it provides a larger fatigue strength.

The entire contents of Japanese Patent Application No. Tokugan 2002-074216 filed March 18, 2002, is incorporated herein by reference. While the present invention has been disclosed in terms of the preferred embodiments in order to facilitate better understanding of the invention, it should be appreciated that the invention can be embodied in various ways without departing from the principle of the invention. Therefore, the invention should be understood to include all possible embodiments which can be embodied without departing from the principle of the invention.

## Claims

1. A preform for forming a metal matrix composite, comprising:
a high volume factor member having a relatively high volume factor; and
a low volume factor member having a relatively low volume factor connected with said high volume factor member.

2. The preform according to claim 1, wherein said high volume factor member is made of solid metal and said low volume factor member is made of metal filaments.

3. The preform according to claim 1 or claim 2, wherein said high volume factor member is formed into a plate configuration and said high volume factor member is interleaved between said two low volume factor members.

4. A method of manufacturing a preform for forming a metal matrix composite, comprising the steps of at least:
laminating at least a low volume factor member having a relatively low volume factor on a high volume factor member having a relatively high volume factor; and
sintering said low volume factor member superimposed on said high volume factor member.

5. A method of manufacturing a preform for forming a metal matrix composite, comprising the steps of:
weaving metal filaments to make a metal filament web;
punching out said metal filament web into a plurality of small webs;
laminating said small webs into a laminated web block;
pressing said laminated web block;
sintering said laminated web block to complete a low volume factor member having a relatively low volume factor;
interleaving a high volume factor member having a relatively high volume factor between said low volume factor members; and
sintering said high volume factor member and said low volume factor member in an interleaving manner between said low volume factor members.

6. A bearing housing structure for supporting a shaft, comprising:
a metal matrix composite formed in a preform.

7. The bearing housing structure according to claim 6, wherein said preform is manufactured by a method comprising the steps of:
laminating at least a low volume factor member having a relatively low volume factor on a high volume factor member having a relatively high volume factor; and
sintering said low volume factor member superimposed on said high volume factor member.

8. The bearing housing structure according to claim 6 or claim 7, wherein said preform is manufactured by a method comprising the steps of:
weaving metal filaments to make a metal filament web;
punching out said metal filament web into a plurality of small webs;
laminating said small webs into a laminated web block;
pressing said laminated web block;
sintering said laminated web block to complete a low volume factor member having a relatively low volume factor;
interleaving a high volume factor member having a relatively high volume factor between said low volume factor members; and
sintering said high volume factor member and said low volume factor member in an interleaving manner between said low volume factor members.

9. The bearing housing structure according to any of claims 6 to 8, wherein said metal matrix composite is formed by integrally casting base material with said preform.

10. A bearing housing structure provided in a cylinder block for supporting a crankshaft, comprising:
a metal matrix composite formed in a preform.

11. The bearing housing structure according to claim 10, wherein said preform is manufactured by a method comprising the steps of:
laminating at least a low volume factor member having a relatively low volume factor on a high volume factor member having a relatively high volume factor; and
sintering said low volume factor member superimposed on said high volume factor member.

12. The bearing housing structure according to claim 10 or claim 11, wherein said preform is manufactured by a method comprising the steps of:
weaving metal filaments to make a metal filament web;
punching out said metal filament web into a plurality of small webs;
laminating said small webs into a laminated web block;
pressing said laminated web block;
sintering said laminated web block to complete a low volume factor member having a relatively low volume factor;
interleaving a high volume factor member having a relatively high volume factor between said low volume factor members; and
sintering said high volume factor member and said low volume factor member in an interleaving manner between said low volume factor members.

13. The bearing housing structure according to any of claims 10 to 12, wherein said metal matrix composite is formed by integrally casting base material with said preform.
